# EUROPÄISCHE PATENTSCHRIFT

(11) **EP 3 961 051 B1**
(45) Veröffentlichungstag und Bekanntmachung des Hinweises auf die Patenterteilung: **29.03.2023**
(21) Anmeldenummer: 21000242.4
(22) Anmeldetag: 24.08.2021
(51) Int. Cl.: F16B 25/00, F16B 35/04, F16B 5/02, H01R 4/30, F16B 1/00, F16B 43/00

(54) **ELEKTRISCHE VERBINDUNG ZWEIER METALLKÖRPER MITTELS METALLISCHER SCHRAUBE**
ELECTRICAL CONNECTION OF TWO METAL BODIES BY MEANS OF METALLIC SCREWS
CONNEXION ÉLECTRIQUE ENTRE DEUX CORPS MÉTALLIQUES AU MOYEN D'UNE VIS MÉTALLIQUE

(30) Priorität: 28.08.2020 DE 102020005300
(43) Veröffentlichungstag der Anmeldung: 02.03.2022
(73) Patentinhaber: ESKA Automotive GmbH, 09126 Chemnitz (DE)
(72) Erfinder: Heinrich, Frank, 91058 Erlangen (DE)
(74) Vertreter: Findeisen Neumann Scheit Partnerschaft mbB

(56) Entgegenhaltungen:
- DE-A1-102019 119 627
- DE-B4- 10 248 102
- DE-U1- 8 225 078
- GB-A- 1 175 034
- US-A- 4 046 054
- US-A1- 2007 269 288

## Beschreibung

Die Erfindung betrifft eine elektrische Verbindung zweier dickwandiger jeweils mit einem Vorloch versehenen Metallkörper mittels metallischer Schraube, wobei die Schraube einen Schraubenkopf und einen daran anschließenden Schraubenschaft aufweist und wobei im Gebrauchszustand der Schraube diese in den axial zueinander ausgerichteten Vorlöchern angeordnet ist und ausgehend vom Schraubenkopf zunächst der erste Metallkörper und nachgelagert der zweite Metallkörper angeordnet ist.

Im Stand der Technik ist aus der DE 10 2019 119 627 A1 eine fließlochformende Schraube zur elektrischen und mechanischen Verbindung eines elektrischen Leiters mit einem Feinblechteil bekannt. Am Schraubenkopf sind an einer dem Blechteil zugewandten Seite Absätzen vorgesehen, die als Verdrehsicherung dienen. Auf die in das Blechteil eingedrehte Schraube ist der elektrische Leiter auf einen Verbindungsabschnitt der Schraube aufsetzbar. Diese Schraubverbindung kann allerdings nur für eine elektrische und mechanische Anbindung eines Leiters an ein dünnes Blech verwendet werden. Für ein zuverlässige mechanische Verbindung zweier Bleche ist diese Schraubverbindung bereits nicht mehr geeignet, da aufgrund der Ausführung des Gewindes der Schraube beim Eindrehen in zwei übereinander liegender Bleche diese nicht aufeinander gezogen werden. Weiterhin ist diese Schraubverbindung auch nicht für eine elektrische Verbindung dickwandiger metallischer Körper geeignet. Beispielsweise ist mit dieser Schraubverbindung keine Verbindung von massiven Stromschienen realisierbar.

Aus der DE 82 25 078 U1 ist eine Schraubverbindung zur elektrischen Verbindung von aufeinander liegenden Metallplatten wie z.B. massiven Stromschienen bekannt. Diese Schraubverbindung weist eine Schraube mit einer Mutter auf, wobei die Schraube jeweils durch Durchgangslöcher der Metallplatten geführt ist. Sowohl am Schraubenkopf, als auch an der Mutter sind jeweils an einer den Metallplatten zugewandten Seite Schneidringe vorgesehen, die beim Festziehen der Schraubverbindung in die Oberfläche der jeweiligen Metallplatte gedrückt werden. Damit wird insbesondere bei beschichteten Oberflächen der Metallplatten eine elektrische Verbindung zum Schraubenkopf bzw. zur Mutter hergestellt und eine elektrische Leitung über die Schraubverbindung ist möglich. Ein Stromfluss wird dabei über die Grenzfläche zwischen dem Muttergewinde und dem Gewinde der Schraube geführt. Nachteilig ist dabei, dass diese Grenzfläche einer Korrosion unterliegt und damit die elektrische Leitung an der Grenzfläche mit zunehmender Korrosion verschlechtert wird.

Aufgabe der Erfindung ist es daher, eine Schraubverbindung zur elektrischen Verbindung dickwandiger metallischer Körper zu schaffen, wobei dabei auch eine sichere mechanische Verbindung dieser metallischen Körper erzielt werden soll. Weiterhin soll die mit der Schraubverbindung erzielte elektrische Verbindung gegen Korrosion geschützt sein.

Diese Aufgabe wird durch eine elektrische Verbindung mit den Merkmalen des Anspruchs 1 gelöst. Vorteilhafte Ausgestaltungen finden sich in den Unteransprüchen 2 und 12.

Die metallische Schraube zur elektrischen Verbindung zweier dickwandiger jeweils mit einem Vorloch versehener Metallkörper weist einen Schraubenkopf und einen daran anschließenden Schraubenschaft auf. Im Gebrauchszustand der Schraube liegt diese in axial zueinander ausgerichteten Vorlöchern der beiden Metallkörper, wobei ausgehend vom Schraubenkopf zunächst der erste Metallkörper und nachgelagert der zweite Metallkörper angeordnet ist. Der Schraubenschaft ist mit einem Konturabschnitt, einem zum Konturabschnitt nachgelagerten gewindefurchenden Abschnitt und einer zwischen Konturabschnitt und gewindefurchenden Abschnitt angeordneten Einschnürung ausgebildet. Ein Kerndurchmesser und ein Außendurchmesser eines Gewindes des gewindefurchenden Abschnitts sind so ausgestaltet, dass der Kerndurchmesser kleiner und der Außendurchmesser größer als ein Durchmesser der Vorlöcher ist. Die zwischen dem Konturabschnitt und dem gewindefurchenden Abschnitt angeordnete Einschnürung weist einen Außendurchmesser auf, der kleiner ist als der Kerndurchmesser des Gewindes des gewindefurchenden Abschnitts der Schraube und insbesondere kleiner dem Kerndurchmesser des durch den gewindefurchenden Abschnitt der Schraube im Metallkörper gefurchten Innengewindes ist. Im Gebrauchszustand der Schraube ist die Einschnürung im Übergangsbereich zwischen dem ersten und dem zweiten Metallkörper angeordnet. Der Konturabschnitt ist mit hervorstehenden Konturelementen versehen, wobei ein Außendurchmesser einer Einhüllenden der Konturelemente zwischen dem Kerndurchmesser und dem Außendurchmesser des Gewindes des gewindefurchenden Abschnitts liegt. Der Konturabschnitt ist in einer Richtung längs zum Schraubenschaft so dimensioniert, dass eine Länge des Konturabschnitts entlang dieser Richtung kleiner als eine Dicke des ersten Metallkörpers ist. Weiterhin ist eine Materialhärte der Schraube größer als eine Materialhärte der Metallkörper.

Als dickwandig werden gegenüber dünnen Metallblechen Metallkörper verstanden, deren Materialstärke mindestens das 3-fache der Gewindesteigung der eingesetzten Schraube entspricht.

Zum Eindrehen der erfindungsgemäßen Schraube werden zunächst die beiden Metallkörper so übereinander gelegt, dass die Vorlöcher beider Metallkörper axial zueinander ausgerichtet sind, wobei der erste Metallkörper auf dem zweiten Metallkörper aufliegt. Es wird dann die Schraube auf das Vorloch des ersten Metallkörpers aufgesetzt und eingedreht, wobei dabei vom Gewinde des gewindefurchenden Abschnitts der Schraube ein Innengewinde im Vorloch des ersten Metallkörpers durch Materialumformung entsteht. Das dabei erzeugte Innengewinde im Vorloch des ersten Metallkörpers weist damit einen Außendurchmesser auf, der dem maximalen Außendurchmesser des Gewindes des gewindefurchenden Abschnitts entspricht. Ein Kerndurchmesser des Innengewindes im Vorloch des ersten Metallkörpers ist entsprechend dem Kerndurchmesser des Gewindes des gewindefurchenden Abschnitts dimensioniert. Ist das Vorloch des ersten Metallkörpers vollständig mit einem Innengewinde versehen, tritt ein erster Abschnitt des Gewindes des gewindefurchenden Abschnitts in das Vorloch des zweiten Metallkörpers ein und erzeugt hier analog zum Vorloch des ersten Metallkörpers ebenfalls ein Innengewinde. Die Länge des Konturabschnitts ist auf die Materialstärke des ersten Metallkörpers abgestimmt, sodass vor Erreichen des Endzustandes (Gebrauchszustand) das Gewinde des gewindefurchenden Abschnitts der Schraube das Vorloch des ersten Metallkörpers verlässt und an der dem Schraubenkopf zugewandten Seite des ersten Metallkörpers der Konturabschnitt in das Innengewinde des Vorlochs eintaucht. Da der Außendurchmesser des Konturabschnitts zwischen dem Kerndurchmesser und dem Außendurchmesser des Gewindes des gewindefurchenden Abschnitts und damit auch zwischen dem Kerndurchmesser und dem Außendurchmesser des geformten Innengewindes im Vorloch des ersten Metallkörpers liegt, wird das Innengewinde im Vorloch des ersten Metallkörpers beim Drehen der Schraube durch die Konturelemente plastisch verformt und eine metallisch blanke Oberfläche erzeugt. Durch die im Vergleich zur Dimensionierung des Außendurchmessers des Gewindes des gewindefurchenden Abschnitts kleinere Dimensionierung des Außendurchmessers des Konturabschnitts wird auch sichergestellt, dass beim Verformen des Innengewindes im Vorloch eventuell entstehender Materialabtrag das Innengewinde im Vorloch nicht verstopft. Durch die plastische Verformung des erst durch das Eindrehen des gewindefurchenden Abschnitts der Schraube erzeugten metallisch blanken Innengewindes im Vorloch des ersten Metallkörpers durch den Konturabschnitt der Schraube werden im Moment der Montage frische Metalloberflächen gebildet, die frei von Korrosionsprodukten oder Oberflächenbelegungen sind, wodurch ein sehr guter elektrischer Kontakt zwischen der Schraube und dem ersten Metallkörper hergestellt wird. Nach dem vollständigen Heraustreten des Gewindes des gewindefurchenden Abschnitts aus dem Vorloch des ersten Metallkörpers befindet sich dann die Einschnürung in Höhe des Übergangs zwischen dem ersten Metallkörper und dem zweiten Metallkörper. Durch die Dimensionierung des Außendurchmessers der Einschnürung werden bei einem Weiterdrehen der Schraube bis zum Endzustand beide Metallkörper aufeinander gezogen und damit eine sehr gute mechanische Verbindung beider Metallkörper erreicht. Wie beim Anformen des Innengewindes im Vorloch des ersten Metallkörpers durch die Konturelemente werden auch beim Formen des Innengewindes im Vorloch des zweiten Metallkörpers durch das Gewinde des gewindefurchenden Abschnitts der Schraube frische Metalloberflächen gebildet, die frei von Korrosionsprodukten oder Oberflächenbelegungen sind, und damit wird auch hier ein sehr guter elektrischer Kontakt zwischen der Schraube und dem zweiten Metallkörper erzeugt. Somit ist ein Stromfluss zwischen dem ersten und zweiten Metallkörper über die Schraube möglich, wobei gleichzeitig auch eine sehr gute mechanische Verbindung erreicht wird. Vorteilhaft ist hierbei weiterhin, dass im Endzustand sowohl die Grenzflächen zwischen dem frisch geformten Innengewinde im Vorloch des zweiten Metallkörpers und dem Gewinde des gewindefurchenden Abschnitts, als auch die Grenzflächen zwischen dem plastisch verformten Innengewinde im Vorloch des ersten Metallkörpers und dem Konturabschnitt der Schraube dicht aufeinander liegen und damit gegen Umwelteinflüsse abgeschlossen sind und somit einer Korrosion entgegengewirkt wird. Ferner ist es vorteilhaft, dass bei der erfindungsgemäßen Schraube auch auf eine Mutter verzichtet werden kann, was zum einen den Materialaufwand und zum anderen auch den Aufwand bei der Montage verringert.

Grundsätzlich kann das Vorloch im zweiten Metallkörper auch ein Sackloch sein, sodass mit der erfindungsgemäßen Schraube beispielsweise auch ein plattenartiger erster Metallkörper mit einem blockartigen zweiten Metallkörper elektrisch leitend verbunden werden kann, ohne dass die Schraube vollständig durch den zweiten Metallkörper hindurchtreten muss.

In einer alternativen Ausführung der erfindungsgemäßen Schraube ist anstelle des gewindefurchenden Abschnitts am Schraubenschaft ein Außengewindeabschnitt mit einem metrischen Außengewinde vorgesehen. Mit dieser Ausführung der Schraube sind zwei dickwandige jeweils mit einem Innengewinde versehene Metallkörper elektrisch miteinander verbindbar. Das metrische Außengewinde des Außengewindeabschnitts ist zu den Innengewinden der Metallkörper kongruent ausgebildet, sodass der Außengewindeabschnitt jeweils in die Innengewinde der Metallkörper eingedreht werden kann. Analog zur obigen Ausführung mit gewindefurchendem Abschnitt ist auch hier der Außendurchmesser der Einschnürung kleiner als ein Kerndurchmesser des Außengewindes des Außengewindeabschnitts. Ebenso liegt auch hier der Außendurchmesser der Einhüllenden der Konturelemente zwischen dem Kerndurchmesser und dem Außendurchmesser des Außengewindes des Außengewindeabschnitts und die sich entlang des Schraubenschaftes erstreckende Länge des Konturabschnitts ist kleiner als eine Dicke des ersten Metallkörpers.

Für die elektrische Verbindung der beiden Metallkörper mit dieser Ausführung der Schraube werden die Metallkörper so aufeinander gelegt, dass die in den beiden Metallkörpern liegenden Innengewinde axial zueinander ausgerichtet sind. Dann wird der Außengewindeabschnitt der Schraube zunächst in das Innengewinde des ersten Metallkörpers eingedreht. Nach dem Durchdringen des ersten Metallkörpers gelangt der Außengewindeabschnitt in das Innengewinde des zweiten Metallkörpers. Analog zur obigen Ausführung erreicht beim weiteren Eindrehen der Schraube dann der Konturabschnitt das Innengewinde des ersten Metallkörpers, wobei auch hier aufgrund der Dimensionierung des Konturabschnitts eine Verformung des Innengewindes des ersten Metallkörpers durch die Konturelemente erfolgt. Ebenso wird auch hier durch die Dimensionierung und Positionierung der Einschnürung sichergestellt, dass beide Metallkörper beim Erreichen des Endzustandes beim Festziehen der Schraube aufeinander gezogen werden. Auch bei dieser Ausführung werden metallisch blanke Oberflächen am ersten Metallkörper erzeugt. Die Materialhärte der Schraube muss größer sein als die Materialhärte des ersten Metallkörpers. Abweichend zur ersteren Ausführungsform kann die Materialhärte des zweiten Metallkörpers auch gleich oder größer der Materialhärte der Schraube sein.

Auch bei der Ausführung der Schraube mit metrischem Gewinde kann das Innengewinde im zweiten Metallkörper sacklochartig ausgestaltet sein.

Es wird vorgeschlagen, dass die Konturelemente des Konturabschnitts mittels Rändeln gebildet sind. Dieses Verfahren lässt sich bei der Ausformung der Schraube in wirtschaftlicher Weise anwenden.

In einer vorteilhaften Ausgestaltung sind die Konturelemente bezogen auf den Schraubenschaft als vertikal ausgerichtete Rändel ausgebildet.

Eine weitere Ausgestaltung sieht vor, dass die Konturelemente Kreuzrändel sind.

Als vorteilhafte Ausgestaltung kann vorgesehen sein, dass die Schraubenkopfauflage am Übergangsbereich zwischen Schraubenschaft und Schraubenkopf mit einer um den Schraubenschaft verlaufenden und in den Schraubenkopf hineinragenden Einbuchtung ausgebildet ist. Somit wird eine Beschädigung des ersten Metallkörpers am Vorloch bzw. am Innengewinde bei Auflage des Schraubenkopfes beim Festziehen der Schraube vermieden.

In einer weiteren vorteilhaften Ausgestaltung ist zwischen dem Schraubenkopf und dem Konturabschnitt eine auf den Schraubenschaft aufgesteckte unverlierbare Unterlegscheibe vorgesehen. Auch dies dient dem Schutz empfindlicher Metallkörperoberflächen beim Festziehen der Schraube, da beim Anziehen der Schraube der Schraubenkopf gegenüber der Scheibe verdreht wird, die Scheibe aber wiederum gegenüber dem Metallkörper aufgrund der größeren Reibung bedingt durch die größere Kontaktfläche feststeht. Eine derartige unverlierbare Unterlegscheibe kann bei der Ausformung der Schraube appliziert werden. Beispielsweise wird die Unterlegscheibe vor der Ausformung der Konturelemente bis zum Schraubenkopf auf den Schraubenschaft aufgeschoben. Anschließend werden die Konturelemente beispielsweise in einem Walzprozess ausgebildet. Ist der Innendurchmesser der Unterlegscheibe kleiner als der Außendurchmesser der Einhüllenden der Konturelemente, ist dann eine Rückführung der Unterlegscheibe vom Schraubenschaft nicht mehr möglich und die Unterlegscheibe unverlierbar mit der Schraube verbunden.

Eine weitere vorteilhafte Ausgestaltung sieht vor, dass der Schraubenkopf an der dem Schraubenschaft zugewandten Seite einen umlaufenden Ringwulst aufweist. Dieser formt sich bei der Montage der Schraube bei Anliegen des Kopfes auf der Oberfläche des ersten Metallkörpers ein, sodass dadurch nach erfolgter Montage an der Schraubenkopfauflage der Übergang zwischen Schraubenkopf und Metallkörper nach außen hin abgedichtet ist und somit der innere Kontaktbereich zwischen Formelement und erstem Metallkörper gegenüber Umgebungseinflüssen und insbesondere Korrosion geschützt wird.

Eine weitere vorteilhafte Ausgestaltung sieht vor, dass der Schraubenkopf an der dem Schraubenschaft zugewandten Seite mit einer zusätzlich angebrachten ringförmigen Dichtung ausgestattet ist. Diese kann aus einem separaten Dichtring oder einer auf den Schraubenkopf direkt aufgebrachten dichtenden Beschichtung bestehen. Der Dichtring oder die auf den Schraubenkopf direkt aufgebrachte Dichtbeschichtung befindet sich vorteilhafterweise am Übergang zwischen Schraubenkopf und Schraubenschaft. Dabei kann der Dichtring oder die Dichtbeschichtung auch in einer zur obigen Beschreibung analogen Einbuchtung am Übergang zwischen Schraubenkopf und Schraubenschaft eingelassen sein.

Eine weitere Ausgestaltung sieht eine Unterlegscheibe vor, die am Innendurchmesser mit einer Gummidichtung versehen ist. Diese Unterlegscheibe wird nach dem Ausformen der Konturelemente und des gewindefurchenden Abschnitts bzw. des Außengewindeabschnitts auf den Schraubenschaft aufgesteckt. Eine derartige Unterlegescheibe dient sowohl der Vermeidung einer Beschädigung der Oberfläche des ersten Metallkörpers beim Festziehen der Schraube, als auch der Abdichtung der Grenzfläche zwischen Schraubenkopf und erstem Metallkörper.

Es wird vorgeschlagen, dass die Schraube aus einem metallischen Werkstoff mit einer hohen elektrischen Leitfähigkeit ausgebildet ist. Weiterhin wird vorgeschlagen, dass die Schraube aus einer Aluminiumlegierung oder Kupferlegierung, vorzugsweise einer warmaushärtbaren Legierung, gebildet ist. Durch die hohe elektrische Leitfähigkeit (insbesondere bei Aluminiumlegierungen und Kupferlegierungen) wird ein guter Stromtransport entlang der Schraube sichergestellt. Durch Nutzung einer warmaushärtbaren Legierung kann die notwendige Festigkeit bzw. Materialhärte für die Schraube erreicht werden.

Nachfolgend wird ein Ausführungsbeispiel der Erfindung anhand der Zeichnungen erläutert. Es zeigen:
- Fig. 1: eine Ausführung einer erfindungsgemäßen Schraube
- Fig. 2a: zwei zu verbindende Metallkörper vor dem Eindrehen der erfindungsgemäßen Schraube
- Fig. 2b: beide Metallkörper mit eingedrehter erfindungsgemäßer Schraube
- Fig. 3: zeigt eine Detaildarstellung einer Ausführung des Schraubenkopfes der erfindungsgemäßen Schraube mit einer in den Schraubenkopf hineinragenden Einbuchtung
- Fig. 4: ein weiteres Ausführungsbeispiel der erfindungsgemäßen Schraube mit Unterlegscheibe
- Fig. 5: ein weiteres Ausführungsbeispiel der erfindungsgemäßen Schraube mit abdichtendem Ringwulst
- Fig. 6: ein weiteres Ausführungsbeispiel der erfindungsgemäßen Schraube mit zusätzlich aufgebrachter Dichtbeschichtung
- Fig. 7: ein weiteres Ausführungsbeispiel der erfindungsgemäßen Schraube mit abdichtender Unterlegscheibe

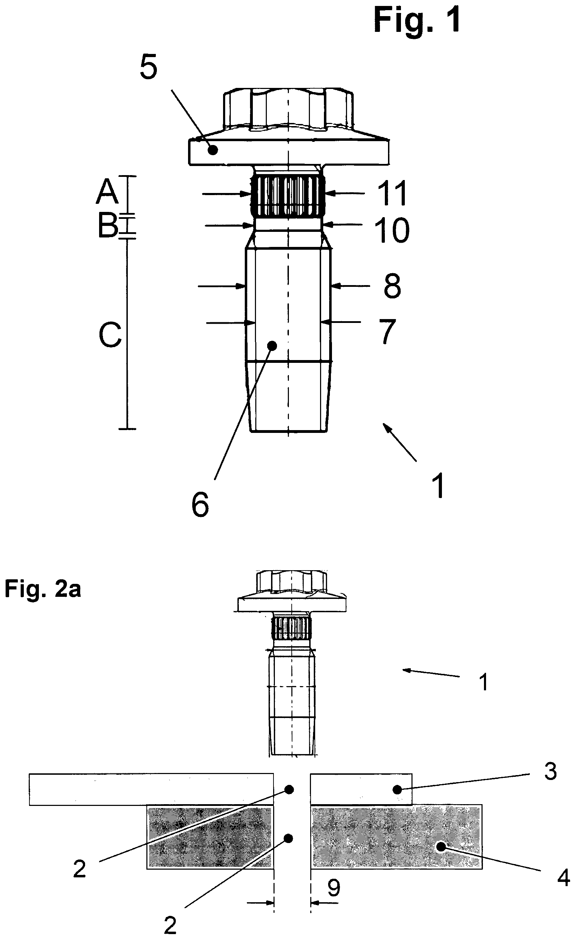

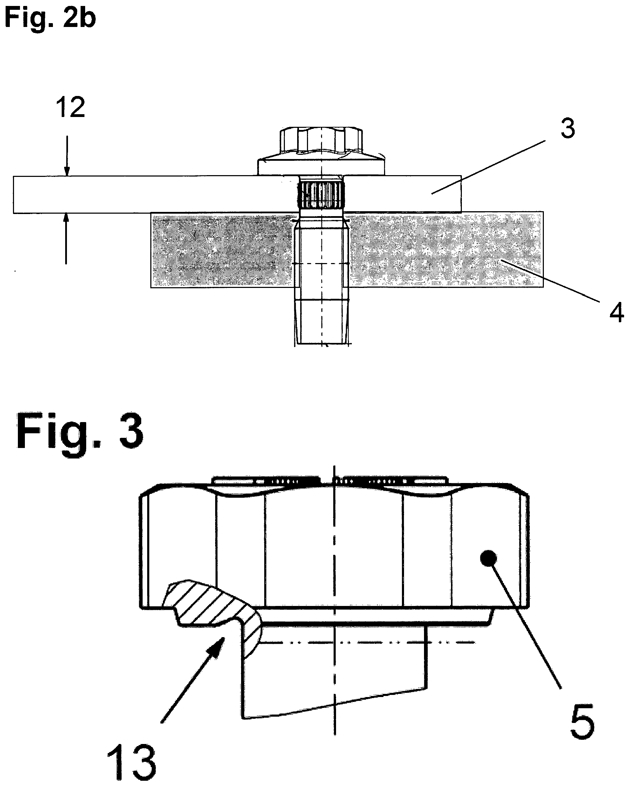

**Fig. 1** zeigt eine Ausführung einer erfindungsgemäßen elektrischen Verbindung zweier dickwandiger jeweils mit einem Vorloch 2 (Fig. 2a) versehenen Metallkörper 3, 4 (Fig. 2a) mittels metallischer Schraube 1. In der dargestellten Ausführung ist die Schraube 1 als metallische M6-Schraube ausgeführt, deren Materialhärte größer ist als die Materialhärte der Metallkörper 3, 4. Die Schraube 1 weist einen Schraubenkopf 5 und einen daran anschließenden Schraubenschaft 6 auf. Der Schraubenschaft 6 ist mit einem Konturabschnitt A, einem zum Konturabschnitt A nachgelagerten gewindefurchenden Abschnitt C und einer zwischen Konturabschnitt A und gewindefurchendem Abschnitt C angeordneten Einschnürung B ausgebildet. Ein Kerndurchmesser 7 und ein Außendurchmesser 8 eines Gewindes des gewindefurchenden Abschnitts C sind so ausgestaltet, dass der Kerndurchmesser 7 kleiner und der Außendurchmesser 8 größer als ein Durchmesser 9 (Fig. 2) der Vorlöcher 2 ist. In der dargestellten Ausführung liegt der Kerndurchmesser 7 bei etwa 5,0 mm und der Außendurchmesser 8 bei etwa 6,2 mm. Der Durchmesser der Vorlöcher beträgt 5,6 mm. Die zwischen dem Konturabschnitt A und dem gewindefurchenden Abschnitt C angeordnete Einschnürung B weist einen Außendurchmesser 10 auf, der kleiner ist als der Kerndurchmesser 7 des Gewindes des gewindefurchenden Abschnitts A. Im Ausführungsbeispiel beträgt der Außendurchmesser 10 der Einschnürung 4,7 mm. Im Gebrauchszustand der Schraube 1 ist die Einschnürung B im Übergangsbereich zwischen dem ersten und dem zweiten Metallkörper 3, 4 angeordnet (vgl. **Fig. 2b****).** Der Konturabschnitt A ist mit Konturelementen versehen, wobei ein Außendurchmesser 11 einer Einhüllenden der Konturelemente zwischen dem Kerndurchmesser 7 und dem Außendurchmesser 8 des Gewindes des gewindefurchenden Abschnitts C liegt. Im dargestellten Ausführungsbeispiel liegt der Außendurchmesser 11 des Konturabschnitts A bei 5,1 mm.

In der dargestellten Ausführung sind die Konturelemente am Konturabschnitt A Rändel, die bezogen auf den Schraubenschaft 6 vertikal ausgerichtet sind. Die Erfindung ist nicht auf derartige Konturelemente beschränkt. Beispielsweise können die Konturelemente auch als Kreuzrändel ausgestaltet sein, ohne aber wiederum auf Rändel beschränkt zu sein.

In **Fig. 2a** und **Fig. 2b** ist die Verbindung zweier dickwandiger Metallkörper 3, 4 mit der Ausführung der erfindungsgemäßen Schraube 1 gemäß **Fig. 1** dargestellt. Bezugnehmend auf die obige Beschreibung zum Ablauf des Eindrehens der Schraube 1 zeigt **Fig. 2a** den Zustand vor dem Eindrehen der Schraube 1, wobei der zweite Metallkörper 4 bereits so auf dem ersten Metallkörper 3 positioniert ist, dass das Vorloch 2 des ersten Metallkörpers 3 und das Vorloch 2 des zweiten Metallkörpers 4 axial zueinander ausgerichtet sind. Weiterhin ist auch die Schraube 1 dargestellt, die aber noch nicht in das Vorloch 2 des ersten Metallkörpers 3 eingeführt worden ist.

**Fig. 2b** zeigt den Endzustand nach vollständigem Eindrehen der Schraube 1. In diesem Zustand hat das Gewinde des gewindefurchenden Abschnitts C das Vorloch 2 des ersten Metallkörpers 3 bereits wieder verlassen und befindet sich im Vorloch 2 des zweiten Metallkörpers 4. Im Vorloch 2 des ersten Metallkörpers 3 befindet sich der Konturabschnitt A, der so dimensioniert ist, dass dieser das Vorloch 2 des ersten Metallkörpers 3 auf einer dem zweiten Metallkörper 3 zugewandten Seite nicht überragt. Im Endzustand liegt der Konturabschnitt A also nur im Vorloch 2 des ersten Metallkörpers 3 und nicht im Vorloch 2 des zweiten Metallkörpers 4. Die Dimensionierung der Länge des Konturabschnitts A längs zum Schraubenschaft 6 muss also auf eine Dicke 12 des ersten Metallkörpers 3 abgestimmt sein.

Die vorgenannten Dimensionen der Schraube 1 sind als beispielhaft für eine M6-Schraube zu verstehen. Die Erfindung ist nicht hierauf beschränkt. Zum einen können die konkreten Dimensionen auch bei einer M6-Schraube im Rahmen der Erfindung abweichen. Zum anderen ist die Erfindung auch nicht auf M6-Schrauben beschränkt, sondern grundsätzlich bei allen Schraubengrößen anwendbar.

In einer weiteren Ausführung der erfindungsgemäßen Schraube ist anstelle des in **Fig. 1** sichtbaren gewindefurchenden Abschnitts C am Schraubenschaft 6 ein Außengewindeabschnitt mit einem metrischen Außengewinde vorgesehen. Mit dieser Ausführung der Schraube sind zwei dickwandige jeweils mit einem zum Außengewinde kongruenten Innengewinde versehene Metallkörper elektrisch miteinander verbindbar.

**Fig. 3** zeigt eine Detaildarstellung einer Ausführung des Schraubenkopfes 5 der erfindungsgemäßen Schraube 1, wobei der Schraubenschaft 6 nicht vollständig gezeigt und der Schraubenkopf 5 teilweise geschnitten dargestellt sind. Der Übergangsbereich zwischen Schraubenschaft 6 und Schraubenkopf 5 ist mit einer um den Schraubenschaft 6 verlaufenden und in den Schraubenkopf 5 hineinragenden Einbuchtung 13 ausgebildet, wobei im Endzustand er Verbindung diese Einbuchtung 13 um das Vorloch 2 herum angeordnet ist.

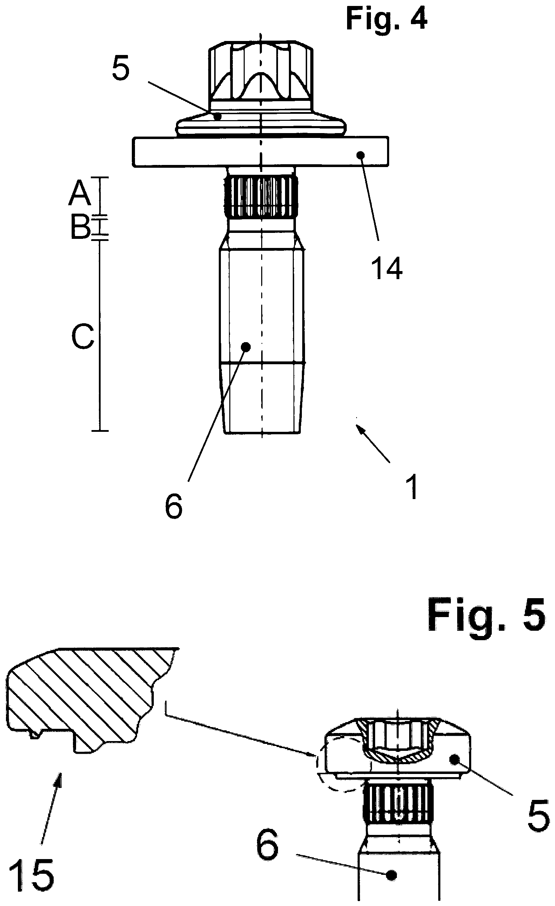

In **Fig. 4** ist ein weiteres Ausführungsbeispiel der erfindungsgemäßen Schraube 1 gezeigt. Im Gegensatz zur Ausführung gemäß **Fig. 1** ist weiterhin eine Unterlegscheibe 14 vorgesehen, die zwischen dem Schraubenkopf 5 und dem Konturabschnitt A angeordnet ist. Das Aufstecken ist so in den Ausformungsprozess der Schraube 1 integriert, dass die Unterlegscheibe 14 nach der fertiggestellten Ausformung der Schraube 1 nicht mehr vom Schraubenschaft 6 herunterschiebbar ist und damit unverlierbar an der Schraube 1 fixiert ist.

**Fig. 5** zeigt rechts eine Detaildarstellung einer Ausführung des Schraubenkopfes 5 der erfindungsgemäßen Schraube 1, wobei auch hier der Schraubenschaft 6 nicht vollständig zu sehen ist. Der eingekreiste Bereich ist in der links gezeigten Detaildarstellung vergrößert abgebildet. An einer dem Schraubenschaft 6 zugewandten Seite ist eine Ringwulst 15 vorhanden, die sich nach erfolgter Montage in die Oberfläche des Gegenbauteiles einformt und somit eine dichtende Funktion bereitstellt.

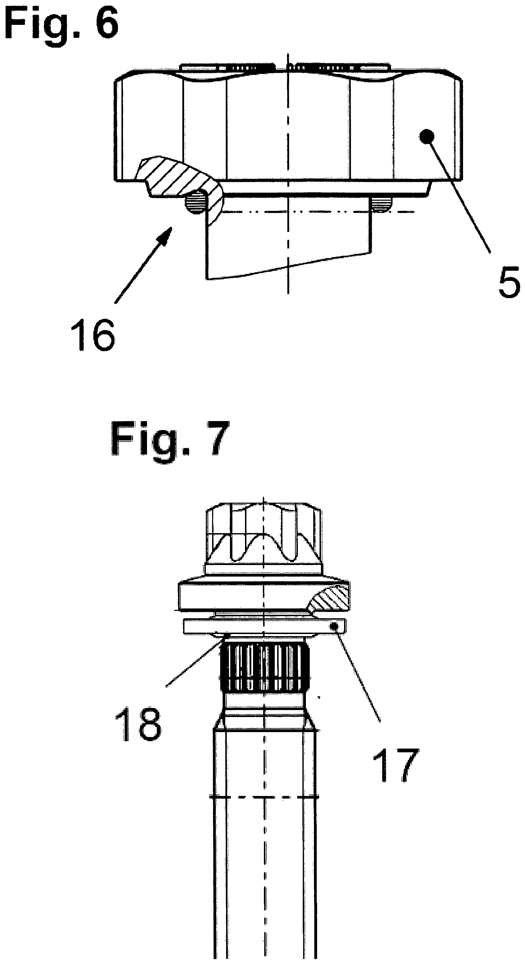

**Fig. 6** zeigt eine Detaildarstellung einer weiteren Ausführung des Schraubenkopfes 5 der erfindungsgemäßen Schraube 1, wobei auch hier der Schraubenschaft 6 nicht vollständig gezeigt und der Schraubenkopf 5 teilweise geschnitten dargestellt sind. Am Übergangsbereich zwischen Schraubenschaft 6 und Schraubenkopf 5 ist eine um den Schraubenschaft 6 umlaufende Dichtung 16 vorgesehen, die in einer ebenfalls um den Schraubenschaft 6 und in den Schraubenkopf 5 eingelassenen Einbuchtung angeordnet ist. Allerdings ist die Anordnung der Dichtung 16 in der Einbuchtung nicht zwingend.

**Fig. 7** zeigt eine weitere Ausführung der erfindungsgemäßen Schraube 1. Ähnlich wie bei der Ausführung gemäß **Fig. 4** ist auch hier eine am Übergangsbereich zwischen Schraubenschaft 6 und Schraubenkopf 5 angeordnete Unterlegscheibe 17 vorgesehen, wobei aber das Innenloch der Unterlegscheibe 17 zusätzlich noch mit einer Dichtung 18 ausgestaltet ist.

### Bezugszeichenliste

- 1: Schraube
- 2: Vorloch
- 3: Metallkörper
- 4: Metallkörper
- 5: Schraubenkopf
- 6: Schraubenschaft
- 7: Kerndurchmesser
- 8: Außendurchmesser
- 9: Durchmesser
- 10: Außendurchmesser
- 11: Außendurchmesser
- 12: Dicke
- 13: Einbuchtung
- 14: Unterlegscheibe
- 15: Ringwulst
- 16: Dichtring / Dichtbeschichtung
- 17: Unterlegscheibe mit Dichtung am Innendurchmesser
- 18: Dichtung
- A: Konturabschnitt
- B: Einschnürung
- C: gewindefurchender Abschnitt

## Patentansprüche

1. Elektrische Verbindung zweier dickwandiger jeweils mit einem Vorloch (2) versehenen Metallkörper (3, 4) mittels metallischer Schraube (1), wobei die Schraube (1) einen Schraubenkopf (5) und einen daran anschließenden Schraubenschaft (6) aufweist und wobei im Gebrauchszustand der Schraube (1) diese in den axial zueinander ausgerichteten Vorlöchern (2) angeordnet ist und ausgehend vom Schraubenkopf (5) zunächst der erste Metallkörper (3) und nachgelagert der zweite Metallkörper (4) angeordnet ist, wobei ausgehend vom Schraubenkopf (5) der Schraubenschaft (6) einen Konturabschnitt (A), einen zum Konturabschnitt (A) nachgelagerten gewindefurchenden Abschnitt (C) und eine zwischen Konturabschnitt (A) und gewindefurchenden Abschnitt (C) angeordnete Einschnürung (B) aufweist und dass ein Gewinde des gewindefurchenden Abschnitts (C) ein gegenüber einem Durchmesser (9) der Vorlöcher (2) kleineren Kerndurchmesser (7) und ein gegenüber dem Durchmesser (9) der Vorlöcher (2) größeren Außendurchmesser (8) aufweist und dass ein Außendurchmesser (10) der Einschnürung (B) kleiner als der Kerndurchmesser (7) des Gewindes des gewindefurchenden Abschnitts (C) ist und dass der Konturabschnitt (A) mit Konturelementen versehen ist und eine Einhüllende der Konturelemente einen Außendurchmesser (11) aufweist, der zwischen dem Kerndurchmesser (7) und dem Außendurchmesser (8) des Gewindes des gewindefurchenden Abschnitts (C) liegt und dass eine sich entlang des Schraubenschaftes (6) erstreckende Länge des Konturabschnitts (A) kleiner als eine Dicke (12) des ersten Metallkörpers (3) ist und dass im Gebrauchszustand der Schraube (1) die Einschnürung (B) im Übergangsbereich zwischen dem ersten und dem zweiten Metallkörper (3, 4) angeordnet ist und dass eine Materialhärte der Schraube (1) größer ist als eine Materialhärte der Metallkörper (3, 4).

2. Elektrische Verbindung zweier dickwandiger jeweils mit einem Innengewinde versehenen Metallkörper (3, 4) mittels metallischer Schraube (1), wobei die Schraube (1) einen Schraubenkopf (5) und einen daran anschließenden Schraubenschaft (6) aufweist und wobei im Gebrauchszustand der Schraube (1) diese in den axial zueinander ausgerichteten Innengewinden der Metallkörper angeordnet ist und ausgehend vom Schraubenkopf (5) zunächst der erste Metallkörper (3) und nachgelagert der zweite Metallkörper (4) angeordnet ist, wobei ausgehend vom Schraubenkopf (5) der Schraubenschaft (6) einen Konturabschnitt (A), einen zum Konturabschnitt (A) nachgelagerten und zu den Innengewinden der Metallkörper (3, 4) kongruenten Außengewindeabschnitt (C) und eine zwischen Konturabschnitt (A) und Außengewindeabschnitt (C) angeordnete Einschnürung (B) aufweist und dass ein Außendurchmesser (10) der Einschnürung (B) kleiner als ein Kerndurchmesser (7) des Außengewindes des Außengewindeabschnitts (C) ist und dass der Konturabschnitt (A) mit Konturelementen versehen ist und eine Einhüllende der Konturelemente einen Außendurchmesser (11) aufweist, der zwischen dem Kerndurchmesser (7) und dem Außendurchmesser (8) des Außengewindes des Außengewindeabschnitts (C) liegt und dass eine sich entlang des Schraubenschaftes (6) erstreckende Länge des Konturabschnitts (A) kleiner als eine Dicke (12) des ersten Metallkörpers (3) ist und dass im Gebrauchszustand der Schraube (1) die Einschnürung (B) im Übergangsbereich zwischen dem ersten und dem zweiten Metallkörper (3, 4) angeordnet ist und dass eine Materialhärte der Schraube (1) größer ist als eine Materialhärte des ersten Metallkörpers (3).

3. Elektrische Verbindung nach Anspruch 1 oder 2, **dadurch gekennzeichnet, dass** die Konturelemente des Konturabschnitts (A) mittels Rändeln gebildet sind.

4. Elektrische Verbindung nach Anspruch 3, **dadurch gekennzeichnet, dass** die Konturelemente bezogen auf den Schraubenschaft vertikal ausgerichtete Rändel sind.

5. Elektrische Verbindung nach Anspruch 3, **dadurch gekennzeichnet, dass** die Konturelemente Kreuzrändel sind.

6. Elektrische Verbindung nach einem der Ansprüche 1 bis 5, **dadurch gekennzeichnet, dass** ein Übergangsbereich zwischen Schraubenschaft (6) und Schraubenkopf (5) mit einer um den Schraubenschaft (6) verlaufenden und in den Schraubenkopf (5) hineinragenden Einbuchtung (13) ausgebildet ist.

7. Elektrische Verbindung nach einem der Ansprüche 1 bis 5, **dadurch gekennzeichnet, dass** zwischen Schraubenkopf (5) und Konturabschnitt (A) eine auf den Schraubenschaft (6) aufgesteckte unverlierbare Unterlegscheibe (14) vorgesehen ist.

8. Elektrische Verbindung nach einem der Ansprüche 1 bis 5, **dadurch gekennzeichnet, dass** der Schraubenkopf (5) an einer dem Schraubenschaft (6) zugewandten Seite eine Ringwulst (15) aufweist.

9. Elektrische Verbindung nach einem der Ansprüche 1 bis 5, **dadurch gekennzeichnet, dass** an einer dem Schraubenschaft (6) zugewandten Seite des Schraubenkopfes (5) eine ringförmige Dichtung (16) angeordnet ist.

10. Elektrische Verbindung nach einem der Ansprüche 1 bis 5, **dadurch gekennzeichnet, dass** an einer dem Schraubenschaft (6) zugewandten Seite des Schraubenkopfes (5) eine auf den Schraubenschaft (6) aufgeschobene Unterlegscheibe (17) angeordnet ist und am Innenloch dieser Unterlegscheibe eine Dichtung (18) vorgesehen ist.

11. Elektrische Verbindung nach einem der vorgenannten Ansprüche, **dadurch gekennzeichnet, dass** die Schraube (1) aus einem metallischen Werkstoff mit einer hohen elektrischen Leitfähigkeit ausgebildet ist.

12. Elektrische Verbindung nach Anspruch 11, **dadurch gekennzeichnet, dass** die Schraube (1) aus einer Aluminiumlegierung oder Kupferlegierung, vorzugsweise einer warmaushärtbaren Legierung, gebildet ist.

## Claims

1. Electrical connection of two thick-walled metal bodies (3, 4), each provided with a pilot hole (2), by means of a metal screw (1), wherein the screw (1) has a screw head (5) and a screw shank (6) adjoining the latter and wherein, in the state of use of the screw (1), the latter is arranged in the pilot holes (2) aligned axially with respect to one another and, starting from the screw head (5), the first metal body (3) is arranged first and followed by the second metal body (4), wherein, starting from the screw head (5), the screw shank (6) has a contoured section (A), a thread-forming section (C) arranged after the contoured section (A), and a constriction (B) arranged between the contoured section (A) and the thread-forming section (C), and in that a thread of the thread-forming section (C) has a core diameter (7) that is smaller than a diameter (9) of the pilot holes (2) and an external diameter (8) that is larger than the diameter (9) of the pilot holes (2), and in that an external diameter (10) of the constriction (B) is smaller than the core diameter (7) of the thread of the thread-forming section (C), and in that the contoured section (A) is provided with contour elements and an envelope of the contour elements has an external diameter (11), which lies between the core diameter (7) and the outer diameter (8) of the thread of the thread-forming section (C), and in that a length of the contoured section (A) extending along the screw shank (6) is smaller than a thickness (12) of the first metal body (3), and in that, in the state of use of the screw (1), the constriction (B) is arranged in the transition region between the first and the second metal body (3, 4) and that a material hardness of the screw (1) is greater than a material hardness of the metal bodies (3, 4).

2. Electrical connection of two thick-walled metal bodies (3, 4), each provided with an internal thread, by means of a metal screw (1), wherein the screw (1) has a screw head (5) and a screw shank (6) adjoining the latter, and wherein, in the state of use of the screw (1), the latter is arranged in the internal threads of the metal bodies, which are aligned axially with respect to one another, and, starting from the screw head (5), first the first metal body (3) and then the second metal body (4) are arranged, wherein, starting from the screw head (5), the screw shank (6) has a contoured section (A), an externally threaded section (C) disposed after the contoured section (A) and congruent with the internal threads of the metal bodies (3, 4), and a constriction (B) arranged between the contoured section (A) and the externally threaded section (C), and in that an external diameter (10) of the constriction (B) is smaller than a core diameter (7) of the external thread of the externally threaded section (C), and in that the contoured section (A) is provided with contour elements and an envelope of the contour elements has an outer diameter (11) which lies between the core diameter (7) and the external diameter (8) of the external thread of the externally threaded section (C), and in that a length of the contoured section (A) extending along the screw shank (6) is smaller than a thickness (12) of the first metal body (3), and in that, in the state of use of the screw (1), the constriction (B) is arranged in the transition region between the first and the second metal body (3, 4), and in that a material hardness of the screw (1) is greater than a material hardness of the first metal body (3).

3. Electrical connection according to claim 1 or 2, **characterised in that** the contour elements of the contoured section (A) are formed by means of knurls.

4. Electrical connection according to claim 3, **characterised in that** the contour elements are knurls aligned vertically with respect to the screw shank.

5. Electrical connection according to claim 3, **characterised in that** the contour elements are cross knurls.

6. Electrical connection according to one of the claims 1 to 5, **characterised in that** a transition region between the screw shank (6) and screw head (5) is formed with an indentation (13) extending around the screw shank (6) and projecting into the screw head (5).

7. Electrical connection according to one of the claims 1 to 5, **characterised in that** a captive washer (14) fitted onto the screw shank (6) is provided between the screw head (5) and the contoured section (A).

8. Electrical connection according to one of the claims 1 to 5, **characterised in that** the screw head (5) has an annular bead (15) on a side facing the screw shank (6).

9. Electrical connection according to one of claims 1 to 5, **characterised in that** an annular seal (16) is arranged on a side of the screw head (5) facing the screw shank (6).

10. Electrical connection according to one of the claims 1 to 5, **characterised in that** a washer (17) pushed onto the screw shank (6) is arranged on a side of the screw head (5) facing the screw shank (6) and a seal (18) is provided on the inner hole of this washer.

11. Electrical connection according to one of the aforementioned claims, **characterised in that** the screw (1) is formed from a metallic material of a high electrical conductivity.

12. Electrical connection according to claim 11, **characterised in that** the screw (1) is formed from an aluminium alloy or copper alloy, preferably a heat-hardenable alloy.

## Revendications

1. Liaison électrique de deux corps métalliques (3, 4) à paroi épaisse, pourvus chacun d'un avant-trou (2), au moyen d'une vis métallique (1), la vis (1) présentant une tête de vis (5) et une tige de vis (6) qui s'y raccorde, et où, à l'état d'utilisation de la vis (1), celle-ci étant située dans les avant-trous (2) orientés dans le sens axial l'un par rapport à l'autre et où, à partir de la tête de vis (5), sont disposés d'abord le premier corps métallique (3) et, en aval, le second corps métallique (4), et celle-ci présentant à partir de la tête de vis (5) de la tige de vis (6), une section de contour (A), une section autotaraudeuse (C) disposée en aval de la section de contour (A) et un rétrécissement (B) disposé entre la section de contour (A) et la section autotaraudeuse (C), et où un filetage de la section autotaraudeuse (C) présente un diamètre de coeur (7) plus petit comparé à un diamètre (9) des avant-trous (2) et un diamètre extérieur (8) plus grand comparé au diamètre (9) des avant-trous (2), et un diamètre extérieur (10) du rétrécissement (B) plus petit que le diamètre de coeur (7) du filetage de la section autotaraudeuse (C), et où la section de contour (A) est pourvue d'éléments de contour et où une enveloppe des éléments de contour présente un diamètre extérieur (11) compris entre le diamètre de coeur (7) et le diamètre extérieur (8) du filetage de la section autotaraudeuse (C), et où une longueur de la partie de contour (A) s'étendant le long de la tige de vis (6) est inférieure à une épaisseur (12) du premier corps métallique (3), et où, à l'état d'utilisation de la vis (1), le rétrécissement (B) est disposé dans la zone de transition entre le premier et le second corps métallique (3, 4), et où une dureté de matériau de la vis (1) est supérieure à une dureté de matériau des corps métalliques (3, 4).

2. Liaison électrique de deux corps métalliques (3, 4) à paroi épaisse, pourvus chacun d'un filetage intérieur, au moyen d'une vis métallique (1), la vis (1) présentant une tête de vis (5) et une tige de vis (6) qui s'y raccorde, et où, à l'état d'utilisation de la vis (1), celle-ci est disposée dans les filetages intérieurs des corps métalliques, orientés dans le sens axial l'un par rapport à l'autre, et où, à partir de la tête de vis (5), sont disposés d'abord le premier corps métallique (3) et, en aval, le second corps métallique (4), et celle-ci présentant, à partir de la tête de vis (5) de la tige de vis (6), une section de contour (A), une section de filetage extérieur (C) disposée en aval de la section de contour (A) et identique en tous points aux filetages intérieurs des corps métalliques (3, 4) et un rétrécissement (B) disposé entre la section de contour (A) et la section de filetage extérieur (C), et où un diamètre extérieur (10) du rétrécissement (B) est inférieur à un diamètre de coeur (7) du filetage extérieur de la section à filetage extérieur (C), où la section de contour (A) est pourvue d'éléments de contour et où une enveloppe des éléments de contour présente un diamètre extérieur (11), lequel est compris entre le diamètre de coeur (7) et le diamètre extérieur (8) du filetage extérieur de la section à filetage extérieur (C), et où une longueur de la section de contour (A) s'étendant le long de la tige de vis (6) est inférieure à une épaisseur (12) du premier corps métallique (3), et où, à l'état d'utilisation de la vis (1), le rétrécissement (B) est disposé dans la zone de transition entre le premier et le second corps métallique (3, 4), et où une dureté de matériau de la vis (1) est supérieure à une dureté de matériau du premier corps métallique (3).

3. Liaison électrique selon la revendication 1 ou2, **caractérisée en ce que** les éléments de contour de la section de contour (A) sont formés moyen de moletages.

4. Liaison électrique selon la revendication 3, **caractérisée en ce que** les éléments de contour sont des moletages orientés verticalement par rapport à la tige de la vis.

5. Liaison électrique selon la revendication 3, **caractérisée en ce que** les éléments de contour sont des moletages croisés.

6. Liaison électrique selon l'une des revendications 1 à 5, **caractérisée en ce qu'**une zone de transition entre la tige de vis (6) et la tête de vis (5) est réalisée avec un renfoncement (13) s'étendant autour de la tige de vis (6) et pénétrant dans la tête de vis (5).

7. Liaison électrique selon l'une des revendications 1 à 5, **caractérisée en ce qu'**une rondelle imperdable (14) emboîtée sur la tige de vis (6) est prévue entre la tête de vis (5) et la section de contour (A).

8. Liaison électrique selon l'une des revendications 1 à 5, **caractérisée en ce que** la tête de vis (5) présente un bourrelet annulaire (15) sur un côté orienté vers la tige de vis (6).

9. Liaison électrique selon l'une des revendications 1 à 5, **caractérisée en ce qu'**un joint d'étanchéité annulaire (16) est disposé sur un côté de la tête de vis (5) orienté vers la tige de vis (6).

10. Liaison électrique selon l'une des revendications 1 à 5, **caractérisée en ce qu'**une rondelle (17) tirée sur la tige de vis (6) est disposée sur un côté de la tête de vis (5) orienté vers la tige de vis (6) et **en ce qu'**un joint d'étanchéité (18) est prévu sur le trou intérieur de cette rondelle.

11. Liaison électrique selon l'une des revendications précédentes, **caractérisée en ce que** la vis (1) est réalisée dans un matériau métallique présentant une conductivité électrique élevée.

12. Liaison électrique selon la revendication 11, **caractérisée en ce que** la vis (1) est réalisée dans un alliage d'aluminium ou d'un alliage de cuivre, de préférence d'un alliage thermodurcissable.
